# EUROPEAN PATENT APPLICATION

(11) **EP 1 349 066 A2**
(43) Date of publication of application: **01.10.2003**
(21) Application number: 03100576.2
(22) Date of filing: 07.03.2003
(51) Int. Cl.: G06F 9/46

(54) **Atomically testing and setting or clearing one or more bits stored in a memory location**

(30) Priority: 11.03.2002 US 363475 P; 22.01.2003 US 349467
(71) Applicant: Texas Instruments Incorporated, Dallas, Texas 75251 (US)
(72) Inventor: Tessarolo, Alexander, Sydney, NSW 2070 (AU); Preskitt, Randall, Garland, TX 75043 (US)
(74) Representative: Holt, Michael

(57) **Abstract**

Logic and method for or atomically testing and setting one or more bits stored in a memory location, in a single operation: disables one or more interrupts (100); access a number stored in a memory location, copies the number from the memory location to a working register (102); tests a particular bit of the number copied from the memory location (104); sets (108) or clears (110) a bit flag to reflect the state of the particular bit copied from the memory location; forces the particular bit of the number copied from the memory location to a predetermined digital state (112); and copies the number from the working register to the memory location (114). The bit flag is preferably in a processor status register used to control later conditional operations.

## Description

### TECHNICAL FIELD OF THE INVENTION

This invention relates generally to processor operations and more particularly to atomically testing and setting or clearing one or more bits stored in a memory location.

### BACKGROUND OF THE INVENTION

One or more bits stored in a memory location may be shared by a number of independent processes that may occasionally interrupt each other. Such bits may be atomically (meaning without interruption) tested and set (meaning changed to one) or cleared (meaning changed to zero). Such testing and setting or clearing of bits may take place, for example, in semaphore or similar operations. Traditionally, atomically testing and setting or clearing one or more bits stored in a memory location has required a number of operations: in a first operation, interrupts are disabled; in a second operation, the memory location is accessed and the number at that location is stored in a register; in a third operation, one or more bits of the number are tested and the test results are stored in one or more status registers; in a fourth operation, the tested bits are set or cleared; in a fifth operation, the number (including the set or cleared bits) is stored in the original memory location; and, in a sixth operation, interrupts are enabled.

### SUMMARY OF THE INVENTION

Particular embodiments of the present invention may reduce or eliminate disadvantages and problems traditionally associated with atomically testing and setting or clearing one or more bits stored in a memory location.

In one embodiment of the present invention, logic for atomically testing and setting one or more bits stored in a memory location, in a single operation: disables one or more interrupts, accesses a number stored in a memory location, copies the number from the memory location to a working register, tests a particular bit of the number copied from the memory location, sets or clears a bit flag to reflect the state of the particular bit copied from the memory location for access in one or more subsequent operations, sets the particular bit of the number copied from the memory location, and copies the number from the working register to the memory location. In a more particular embodiment, the logic described above, in a single operation: accesses a number stored in a register, copies the number from the register to a working register, tests a particular bit of the number copied from the register, sets or clears a bit flag to reflect the state of the particular bit of the number copied from the register for access in one or more subsequent operations, sets the particular bit of the number copied from the register, and copies the number from the working register to the register.

In another embodiment, logic for atomically testing and clearing one or more bits stored in a memory location, in a single operation: disables one or more interrupts, accesses a number stored in a memory location, copies the number from the memory location to a working register, tests a particular bit of the number copied from the memory location, sets or clears a bit flag to reflect the state of the particular bit copied from the memory location for access in one or more subsequent operations, clears the particular bit of the number copied from the memory location, and copies the number from the working register to the memory location. In a more particular embodiment, the logic described above, in a single operation: accesses a number stored in a register, copies the number from the register to a working register, tests a particular bit of the number copied from the register, sets or clears a bit flag to reflect the state of the particular bit of the number copied from the register for access in one or more subsequent operations, clears the particular bit of the number copied from the register, and copies the number from the working register to the register.

Particular embodiments of the present invention may provide one or more technical advantages. Particular embodiments may substantially reduce the number of operations required to atomically test and set or clear bits stored in memory locations, which may reduce code size associated with atomically testing and setting or clearing bits stored in memory locations. Particular embodiments may provide one or more operations for atomically testing and setting or clearing bits stored in memory locations and bits stored in registers. Particular embodiments may provide one or more orthogonal operations for atomically testing and setting or clearing bits. Particular embodiments may provide one or more operations for atomically testing and setting or clearing bits stored in memory locations that may be executed in a single cycle (barring memory conflicts) by processor systems that include a Read→Execute→Write "pipeline." Particular embodiments may increase efficiency in semaphore operations. Certain embodiments may provide all, some, or none of these technical advantages, and certain embodiments may provide one or more other technical advantages which may be readily apparent to those skilled in the art from the figures, descriptions, and claims included herein.

### BRIEF DESCRIPTION OF THE DRAWINGS

To provide a more complete understanding of the present invention and the features and advantages thereof, reference is made to the following description, taken in conjunction with the accompanying drawings, in which:
FIGURE 1 illustrates an example processor system;
FIGURE 2 illustrates execution of an example TCLR operation; and
FIGURE 3 illustrates execution of an example TSET operation.

### DESCRIPTION OF EXAMPLE EMBODIMENTS

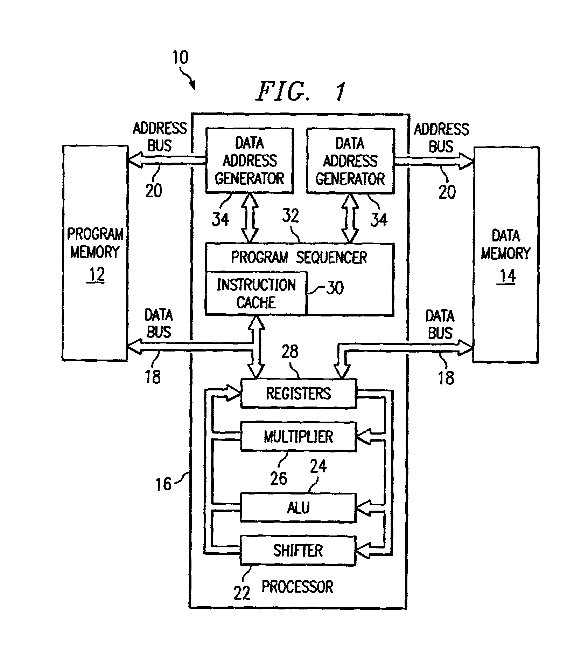

FIGURE 1 illustrates an example processor system 10, which may include a digital signal processor (DSP). Although a particular processor system 10 is described and illustrated, the present invention contemplates any suitable processor system 10 including any suitable architecture. Processor system 10 may include program memory 12, data memory 14, and processor 16. Program memory 12 may be used to store program instructions for operations executed by processor 16, and data memory 14 may be used to store data used in operations executed by processor 16. Data (which may include program instructions, data used in operations executed by processor 16, or any other suitable data) may be communicated between processor 16 and program memory 12 and between processor 16 and data memory 14 using data buses 18, which may include any suitable physical medium for such communication. For example, data buses 18 may include one or more wires coupling processor 16 to program memory 12 and data memory 14. The number of bits that may be communicated across a data bus 18 in one clock cycle (which may include a unit of time between two adjacent pulses of a clock signal for processor system 10) may be limited. For example, in a 32-bit environment, a maximum of thirty-two bits may be communicated across each data bus 18 in one clock cycle. Data addresses (which may specify locations for data within program memory 12, data memory 14, elsewhere within processor system 10, or outside processor system 10 and may, where appropriate, include the locations themselves) may be communicated between processor 16 and program memory 12 and between processor 16 and data memory 14 using address buses 20, which may include any suitable physical medium for such communication. For example, address buses 20 may include one or more wires coupling processor 16 with program memory 12 and data memory 14. Similar to data buses 18, the number of bits that may be communicated across an address bus 20 in one clock cycle may be limited.

Processor 16 may execute mathematical, logical, and any other suitable operations and may, for example only and not by way of limitation, include one or more shifters 22, arithmetic-logic units (ALUs) 24, multipliers 26, data registers 28, instruction caches 30, program sequencers 32, and data address generators 34. Although a particular processor 16 is described and illustrated, the present invention contemplates any suitable processor 16 including any suitable components. Shifter 22 may be used to left- or right-shift data units and perform other suitable tasks. ALU 24 may be used for addition, subtraction, absolute value operations, logical operations (such as, for example, AND, OR, NAND, NOR, and NOT operations), and other suitable tasks. Multiplier 26 may be used for multiplication and other suitable tasks. In a 32-bit environment, shifter 22, ALU 24, and multiplier 26 may each process a maximum of thirty-two bits in one clock cycle. For example, ALU 24 may in one clock cycle add numbers that include at most thirty-two bits. To add numbers that include more than thirty-two bits, the numbers may be divided into parts that each include thirty-two or fewer bits and added in parts.

Registers 28 may include a number of locations for storing intermediate operation results, flags for program control, and the like. For example, registers 28 may include one or more general data registers, temporary registers, condition code registers (CCRs), status registers (SRs), address registers, and other suitable registers. In a 32-bit environment, each register 28 may be used to store a maximum of thirty-two bits. Instruction cache 30 may be used to store one or more program instructions for recurring operations. For example, program instructions for one or more operations that are part of a loop of operations executed by processor 16 may be stored using instruction cache 30 such that program memory 12 need not be accessed each time a program instruction for one or more of the operations is to be executed. Program sequencer 32 may direct the execution of operations by processor 16 and perform other suitable tasks. Data address generators 34 may communicate addresses to program memory 12 and data memory 14 specifying memory locations within program memory 12 and data memory 14 from which data may be read and to which data may be written. Although particular components of processor 16 are described as performing particular tasks, any suitable components of processor 16, alone or in combination, may perform any suitable tasks. In addition, although the components of processor 16 are described and illustrated as separate components, any suitable component of processor 16 may be wholly or partly incorporated into one or more other components of processor 16.

One or more bits stored in a memory location (which may include a memory location within program memory 12, data memory 14, elsewhere within processor system 10, or outside processor system 10) may be shared by a number of independent processes that may occasionally interrupt each other. One or more bits stored in a register 28 may similarly be shared by a number of independent processes. Such bits may be atomically (meaning without interruption) tested and set (meaning changed to one) or cleared (meaning changed to zero). Such testing and setting or clearing of bits may take place, for example, in semaphore or similar operations. Traditionally, atomically testing and setting or clearing one or more bits stored in a memory location has required a number of operations: in a first operation, interrupts are disabled; in a second operation, the memory location is accessed and the number at that location is stored in a register 28; in a third operation, one or more bits of the number are tested and the test results are stored in one or more status registers 28; in a fourth operation, the tested bits are set or cleared; in a fifth operation, the number (including the set or cleared bits) is stored in the original memory location; and, in a sixth operation, interrupts are enabled.

In particular embodiments, a single operation may atomically test and clear one or more bits stored in a memory location or a register 28. As an example only and not by way of limitation, such operations may be described as follows:
TCLR MemValue, #N ; TestBitFlag = [MemValue(#N)]
   ; [MemValue(#N)] = 0
TSET MemValue, #N ; TestBitFlag = [MemValue(#N)]
   ; [MemValue(#N)] = 1
MemValue may include the memory location or register 28 in which the bit to be tested is stored. Herein, reference to a memory location or register 28 may, where appropriate, include the contents of the memory location or register 28 and may, where appropriate, include the location (logical or otherwise) of the memory location or register 28. N may include the position within the memory location or register 28 of the bit to be tested. TestBitFlag may include a bit flag that may be set for the later execution of one or more conditional operations or for any other suitable purpose. TestBitFlag may be stored in a status register 28 or other suitable location within or outside processor system 10. TCLR may, in a single operation, atomically test a bit stored in a memory location or a register 28, set or clear TestBitFlag to reflect the state of the tested bit, and clear the tested bit. Similarly, TSET may, in a single operation, atomically test a bit stored in a memory location or a register 28, set or clear TestBitFlag to reflect the state of the tested bit, and set the tested bit. Such operations may be implemented in hardware, software, or any suitable combination of hardware and software in processor system 10 or any other suitable processor system. In particular embodiments, such operations may be orthogonal.

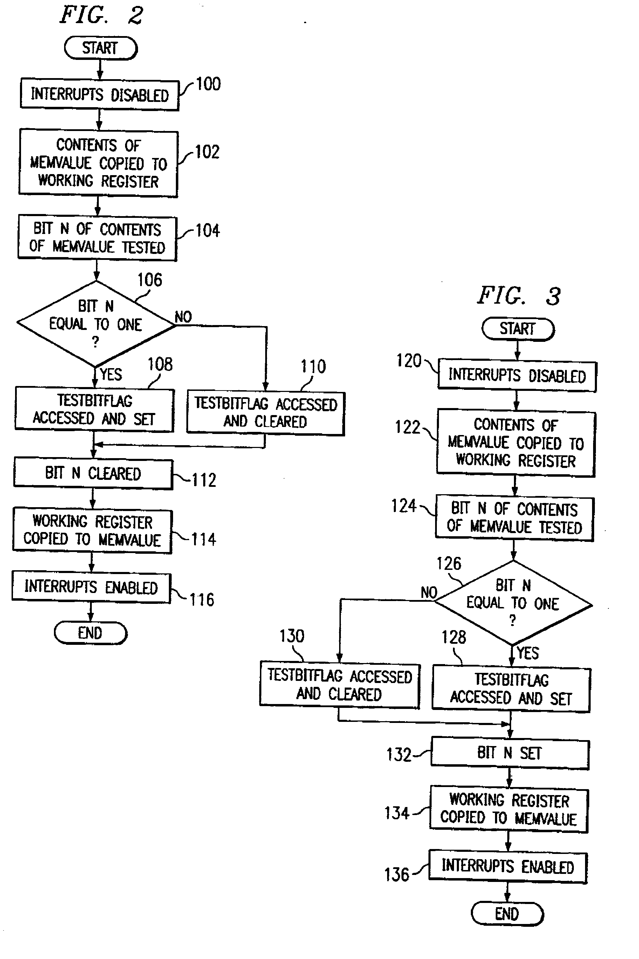

FIGURE 2 illustrates execution of an example TCLR operation. Execution begins at step 100, where one or more interrupts are disabled. At step 102, the contents of MemValue are copied from MemValue to a working register 28. As described above, MemValue may include the memory location or register 28 in which the bit to be tested is stored. Working register 28 may include any suitable register 28 for storing intermediate operation results. At step 104, bit N of the contents of MemValue is tested. At step 106, if bit N is equal to one, execution of the TCLR operation proceeds to step 108. At step 108, TestBitFlag is accessed and set to reflect the state of bit N. As described above, TestBitFlag may be stored in a status register 28 or other suitable location within or outside processor system 10. At step 106, if bit N is equal to zero, execution of the TCLR operation proceeds to step 110. At step 110, TestBitFlag is accessed and cleared to reflect the state of bit N. At step 112, bit N is cleared. At step 114, the contents of MemValue (including the cleared bit) are copied from working register 28 to MemValue. At step 116, the disable interrupts are enabled, at which point execution of the TCLR operation may end.

FIGURE 3 illustrates execution of an example TSET operation. Execution begins at step 120, where one or more interrupts are disabled. At step 122, the contents of MemValue are copied from MemValue to a working register 28. As described above, MemValue may include the memory location or register 28 in which the bit to be tested is stored. Working register 28 may include any suitable register for storing intermediate operation results. At step 124, bit N of the contents of MemValue is tested. At step 126, if bit N is equal to one, execution of the TSET operation proceeds to step 128. At step 128, TestBitFlag is accessed and set to reflect the state of bit N. As described above, TestBitFlag may be stored in a status register 28 or other suitable location within or outside processor system 10. At step 126, if bit N is equal to zero, execution of the TSET operation proceeds to step 130. At step 130, TestBitFlag is accessed and cleared to reflect the state of bit N. At step 132, bit N is set. At step 134, the contents of MemValue (including the cleared bit) are copied from working register 28 to MemValue. At step 136, the disable interrupts are enabled, at which point execution of the TSET operation may end.

Particular embodiments may substantially reduce the number of operations required to atomically test and set or clear bits stored in memory locations, which may reduce code size associated with atomically testing and setting or clearing bits stored in memory locations. Particular embodiments may provide one or more operations for atomically testing and setting or clearing bits stored in memory locations and bits stored in registers 28. Particular embodiments may provide one or more orthogonal operations for atomically testing and setting or clearing bits. Particular embodiments may provide one or more operations for atomically testing and setting or clearing bits stored in memory locations that may be executed in a single cycle (barring memory conflicts) by processor systems that include a Read→Execute→Write "pipeline." Particular embodiments may increase efficiency in semaphore operations. Certain embodiments may provide all, some, or none of these technical advantages, and certain embodiments may provide one or more other technical advantages.

Although the present invention has been described with several embodiments, sundry changes, substitutions, variations, alterations, and modifications may be suggested to one skilled in the art, and it is intended that the invention may encompass all such changes, substitutions, variations, alterations, and modifications falling within the scope of the appended claims.

## Claims

1. A method for atomically testing and setting one or more bits stored in a memory location, the method comprising, in a single operation:
disabling one or more interrupts;
accessing a number stored in a memory location;
copying the number from the memory location to a working register;
testing a particular bit of the number copied from the memory location;
setting or clearing a bit flag to reflect the state of the particular bit copied from the memory location for access in one or more subsequent operations;
forcing the particular bit of the number copied from the memory location to a predetermined digital state;
copying the number from the working register to the memory location.

2. The method of Claim 1, wherein the bit flag is set if the particular bit is equal to one and cleared if the particular bit is equal to zero to reflect the state of the particular bit copied from the memory location.

3. The method of Claim 1 or 2, wherein:
the memory location comprises a location within data memory associated with a processor system;
the bit flag is stored in a status register associated with the processor system; and
wherein one or more subsequent operations of the processor system are conditional operations conditioned upon a selected bit of the status register.

4. The method of any one of Claims 1 to 3, wherein:
the predetermined digital state is a set state.

5. The method of any one of Claims 1 to 3, wherein:
the predetermined digital state is a clear state.

6. Logic for atomically testing and setting one or more bits stored in a memory location, the logic encoded in media and when executed operable to, in a single operation:
disable one or more interrupts;
access a number stored in a memory location;
copy the number from the memory location to a working register;
test a particular bit of the number copied from the memory location;
set or clear a bit flag to reflect the state of the particular bit copied from the memory location for access in one or more subsequent operations;
force the particular bit of the number copied from the memory location to a predetermined digital state;
copy the number from the working register to the memory location.

7. The logic of Claim 6, wherein the bit flag is set if the particular bit is equal to one and cleared if the particular bit is equal to zero to reflect the state of the particular bit copied from the memory location.

8. The logic of Claim 6 or 7, wherein:
the memory location comprises a location within data memory associated with a processor system;
the bit flag is stored in a status register associated with the processor system; and
wherein one or more subsequent operations of the processor system are conditional operations conditioned upon a selected bit of the status register.

9. The logic of any one of Claims 6 to 8, wherein:
the predetermined digital state is a set state.

10. The logic of any one of Claims 6 to 8, wherein:
the predetermined digital state is a clear state.
